# EUROPEAN PATENT SPECIFICATION

(11) **EP 2 567 745 B1**
(45) Date of publication and mention of the grant of the patent: **18.06.2014**
(21) Application number: 12176101.9
(22) Date of filing: 12.07.2012
(51) Int. Cl.: B01D 46/24

(54) **Honeycomb catalyst carrier**
Wabenförmiger Katalysatorträger
Support de catalyseur en nid d'abeilles

(30) Priority: 26.07.2011 JP 2011162726
(43) Date of publication of application: 13.03.2013
(73) Proprietor: NGK Insulators, Ltd., Nagoya-city, Aichi 467-8530 (JP)
(72) Inventor: MIYAIRI, Yukio, Nagoya city, Aichi 467-8530 (JP); HIROSE, Shogo, Nagoya city, Aichi 467-8530 (JP)
(74) Representative: Naylor, Matthew John

(56) References cited:
- EP-A1- 0 585 572
- EP-A1- 0 586 820
- US-A1- 2006 280 905

## Description

### Background of the Invention and Related Art Statement

The present invention relates to a honeycomb catalyst carrier. More specifically, the present invention relates to a honeycomb catalyst carrier capable of being suitably used as a catalyst carrier for loading a catalyst for exhaust gas purification.

There has conventionally been proposed an exhaust gas purification device obtained by loading a catalyst for purification on a catalyst carrier in order to purify target components contained in exhaust gas discharged from automobile engines, construction machinery engines, industrial stationary engines, and the like. Examples of the aforementioned target components include hydrocarbon (HC), carbon monoxide (CO), and nitrogen oxide (NOx) . As a catalyst carrier for such an exhaust gas purification device, there is used, for example, a honeycomb catalyst carrier provided with porous partition walls separating and forming a plurality of cells functioning as fluid passages (in other words, honeycomb structure) (see, e.g., JP-A-2009-242133, Japanese Patent No. 4246475, and WO No. 2001/060514 pamphlet). The catalyst for purification is loaded on the surfaces of the partition walls and inside the pores of the partition walls.

Purification by a ternary catalyst is effective for purifying HC, CO, and NOx contained in exhaust gas, and such a ternary catalyst is widely used for purifying exhaust gas. Somewhat high temperature is necessary for the ternary catalyst or the like to function effectively. Therefore, it is important in purifying exhaust gas how to quickly raise the temperature of the catalyst loaded on the honeycomb catalyst carrier. For example, in the initial driving stages such as engine start-up before the ternary catalyst loaded on the honeycomb catalyst carrier is warmed up to the temperature where the ternary catalyst effectively functions, HC and CO in the exhaust gas may be discharged outside without being purified sufficiently.

Therefore, there has conventionally been taken a countermeasure of reducing the thermal capacity of the honeycomb catalyst carrier by thinning the partition walls of the honeycomb catalyst carrier or by raising a porosity of a honeycomb catalyst carrier. This enables to warm up the honeycomb catalyst carrier fast by the exhaust gas discharged from an automobile engine (in other words, combustion gas) and raise the temperature of the catalyst loaded on the honeycomb catalyst carrier faster. Therefore, even in the initial driving stage of an engine, a high purification function can be obtained.

However, thinning the partition walls of the honeycomb catalyst carrier has a problem of reducing the structural strength of the honeycomb catalyst carrier. When a honeycomb catalyst carrier is used for an exhaust gas purification device, the honeycomb catalyst carrier is disposed in the state of being inserted into a metallic can and maintained in the can by means of a holding member (mat) . At this time, the honeycomb catalyst carrier may be damaged by the compressive contact pressure applied to the honeycomb catalyst carrier. In addition, thinning the partition walls of the honeycomb catalyst carrier may cause peeling of an oxidized scale and a welding pit of an exhaust manifold and be mixed into the exhaust gas to be purified. In such a case, there may be caused a collision of the oxidized scale or the like with the inlet end face of the honeycomb catalyst carrier to be etched by erosion in the honeycomb catalyst carrier.

In addition, in the case of raising the porosity of honeycomb catalyst carrier, the temperature of the catalyst loaded on the honeycomb catalyst carrier rises fast for the decrease of thermal capacity of the honeycomb catalyst carrier in the state that the honeycomb catalyst carrier is dry. However, when certain time has passed by stopping the engine or by putting the engine in a low load (idling) driving state after high load driving of an engine, the moisture in exhaust gas may be coagulated (condensed) in the stage where temperature of the engine and the exhaust system falls. When the moisture is coagulated, the aforementioned moisture accumulates in the pores of the partition walls of the honeycomb catalyst carrier. In such a state, the thermal capacity (latent heat, sensible heat) of the moisture accumulating in the pores hinders the temperature rise of the honeycomb catalyst carrier upon the subsequent driving.

That is, it has conventionally been considered that it is only necessary to reduce the thermal capacity of the honeycomb catalyst carrier in order to raise fast the temperature of the catalyst loaded on the honeycomb catalyst carrier. However, it has been found out that the aforementioned coagulated moisture (hereinbelow sometimes referred to as "coagulated water") of moisture in exhaust gas hinders the temperature rise of the honeycomb catalyst carrier and the catalyst loaded on the honeycomb catalyst carrier.

In WO No. 2001/060514 pamphlet, there is proposed a ceramic honeycomb catalyst carrier having a porosity of 20% or less and an average surface roughness Ra of 0.5 µm or more of the partition walls of the carrier. The honeycomb catalyst carrier described in WO No. 2001/060514 pamphlet is for maintaining high structural strength, and its substantial porosity is above 10% and not more than 20%. The problem of hindering the temperature rise of the honeycomb catalyst carrier due to the aforementioned coagulated water is particularly remarkably caused in a honeycomb catalyst carrier having high porosity. However, even with the porosity of "above 10% and not more than 20%" described in WO No. 2001/060514 pamphlet, the coagulated water accumulates in the pores of the partition walls, and the thermal capacity (latent heat, sensible heat) of the coagulated water hinders the temperature rise of the honeycomb catalyst carrier.

In addition, in cold environments, water in exhaust gas particularly coagulates and a large amount of coagulated water is accumulated in pores of the honeycomb catalyst carrier. Upon engine start-up, it is necessary to raise the temperature of the honeycomb catalyst carrier fast up to the catalyst-activating temperature from the viewpoint of catalytic activity. However, in the aforementioned cold environments, since a large amount of heat is used for latent heat of vaporization of the coagulated water, temperature of a honeycomb catalyst carrier does not rise, thereby having a problem of insufficient purification of HC and CO right after the engine start-up.

Further, in the aforementioned cold environments, when the honeycomb catalyst carrier is left stand for a long period of time in the state that a large amount of coagulated water is in the pores of the honeycomb catalyst carrier, the coagulated water in the pores may freeze and expand, thereby damaging the honeycomb catalyst carrier. Thus, in cold environments, damage of the honeycomb catalyst carrier by the freezing and expansion of the coagulated water is a serious problem in addition to the problem of hindering the temperature rise of the honeycomb catalyst carrier by the coagulated water. Therefore, development of a honeycomb catalyst carrier hardly having accumulation of coagulated water is required as soon as possible.

EP 0 585 572 describes an apparatus, system and method for modifying a gaseous mixture. The apparatus comprises a unitary body having an inlet end, an outlet end, and a multiplicity of cells extending from inlet end to outlet end, the cells being separated from one another by porous walls, and filler material comprising electrically non-conducting active powder material, loaded into at least part of the volume of the cells, with some of the cells being unloaded and open, wherein a gaseous mixture enters the body at the inlet end through the open cells, and at least some of the gaseous mixture passes through the porous walls and is compositionally modified by the active material, and thereafter the resultant modified mixture passes through the open cells and exits the body at the outlet end. The cell walls comprise cordierite and have a porosity from 1% to 70%.

US 2006/0280905 a honeycomb structure has a plurality of cells which are partitioned by partition walls and function as fluid passages, and an end portion of predetermined cells is plugged by a plugging member. The plugging member has lower rigidity than that of the partition walls and has higher heat capacity than that of the partition walls.

### Summary of the Invention

The present invention has been made in view of the aforementioned problems and provides a honeycomb catalyst carrier capable of being warmed fast so that the temperature of the catalyst loaded on the honeycomb catalyst carrier can be raised faster. In particular, there is provided a honeycomb catalyst carrier where the coagulated water by coagulation of moisture in exhaust gas hardly accumulates in the pores of the partition walls and where the heat transferred to the honeycomb catalyst carrier is hardly taken by the coagulated water.

According to the present invention, there is provided the following honeycomb catalyst carrier.
[1] A honeycomb catalyst carrier provided with porous partition walls containing cordierite or aluminum titanate as a main component and separating and forming a plurality of cells functioning as fluid passages, wherein the partition walls have a porosity of 0.5% or more and 10% or less; and wherein the partition walls have an average thermal expansion coefficient of 1×10⁻⁶/K or less at 200 to 800°C in the cell extension direction.
[2] The honeycomb catalyst carrier according to [1], wherein the honeycomb catalyst carrier has a cell density of 15 cells/cm² or more and 150 cells/cm² or less, a thickness of 25 µm or more and 100 µm or less, and an aperture ratio of 90% or more and 95% or less in a cross section perpendicular to the cell extension direction.

A honeycomb catalyst carrier of the present invention is a honeycomb catalyst carrier provided with porous partition walls containing cordierite or aluminum titanate as a main component and separating and forming a plurality of cells functioning as fluid passages, wherein the partition walls have a porosity of 0.5% or more and 10% or less. Thus, a honeycomb catalyst carrier of the present invention has extremely low porosity of the partition walls in comparison with conventional honeycomb catalyst carriers. According to a honeycomb catalyst carrier of the present invention, a honeycomb catalyst carrier is warmed fast by the heat of exhaust gas to be able to raise the temperature of the catalyst loaded on the honeycomb catalyst carrier more rapidly. That is, since the porosity of the partition walls is extremely low, the coagulated water of moisture in exhaust gas (e.g., coagulated water generated when exhaust gas is cooled) hardly accumulates in the pores of the partition walls, and therefore heat (thermal energy) is hardly taken. Therefore, heat transferred to the honeycomb catalyst carrier is effectively used for heating the honeycomb catalyst carrier and the catalyst loaded on the honeycomb catalyst carrier, and the honeycomb catalyst carrier is warmed up fast.

In addition, in a honeycomb catalyst carrier of the present invention, since coagulated water hardly accumulates in the pores of the partition walls, damage of the catalyst carrier by freezing and expansion of the coagulated water in cold environments can effectively inhibited.

### Brief Description of the Drawing

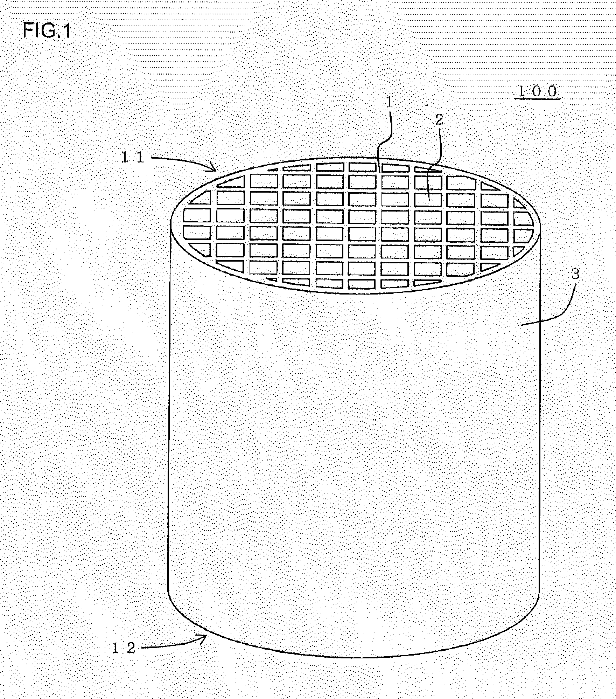

[Fig. 1] Fig. 1 is a perspective view schematically showing an embodiment of a honeycomb catalyst carrier of the present invention.

### Reference Numerals

1: partition wall, 2: cell, 3: outer peripheral wall, 11: end face on one side, 12: end face on the other side, 100: honeycomb catalyst carrier

### Detailed Description of the Invention

Hereinbelow, an embodiment of the present invention will specifically be described with referring to a drawing. However, the present invention is by no means limited to the following embodiment. It should be understood that embodiments obtained by suitably adding changes, improvements, and the like to the following embodiment on the basis of knowledge of a person of ordinary skill in the art within the range of not deviating from the gist of the present invention are included in the scope of the present invention.

### (1) Honeycomb catalyst carrier:

As shown in Fig. 1, the honeycomb catalyst carrier 100 of an embodiment of the present invention is provided with porous partition walls 1 containing cordierite or aluminum titanate as a main component and separating and forming a plurality of cells 2 functioning as fluid passages. Fig. 1 shows an example of a cylindrical honeycomb catalyst carrier 100 provided with porous partition walls 1 separating and forming a plurality of cells 2 extending from the end face 11 on one side to the end face 12 on the other side and an outer peripheral wall 3 located in the outermost periphery. Here, Fig. 1 is a perspective view schematically showing an embodiment of a honeycomb catalyst carrier of the present invention.

In the honeycomb catalyst carrier 100 of the present embodiment, the porosity of the partition walls 1 is 0.5% or more and 10% or less. Thus, the honeycomb catalyst carrier 100 of the present embodiment has extremely low porosity of the partition walls 1 in comparison with conventional honeycomb catalyst carriers. According to the honeycomb catalyst carrier 100 of the present embodiment, a honeycomb catalyst carrier 100 can be warmed up fast by the heat of exhaust gas, thereby raising the temperature of the catalyst (not illustrated) loaded on the honeycomb catalyst carrier 100 more rapidly. That is, since the porosity of the partition walls 1 is extremely low, the coagulated water of moisture in exhaust gas (e.g., coagulated water generated when exhaust gas is cooled) hardly accumulates in the pores of the partition walls 1, and heat (thermal energy) is hardly taken by the coagulated water. Therefore, the heat transferred to the honeycomb catalyst carrier 100 is effectively used for heating the honeycomb catalyst carrier 100 and the catalyst loaded on the honeycomb catalyst carrier 100, and the honeycomb catalyst carrier 100 is warmed up fast. Since this quickly raises the temperature of the catalyst loaded on the honeycomb catalyst carrier 100 to the activating temperature, the purification performance for hydrocarbon (HC), carbon monoxide (CO), and nitrogen oxide (NOx) contained in exhaust gas can be improved in a good manner.

In addition, in the honeycomb catalyst carrier 100 of the present embodiment, since the coagulated water hardly accumulates in the pores of the partition walls 1, damage of the honeycomb catalyst carrier 100 due to the freezing and expansion of the coagulated water is effectively inhibited.

For example, when the partition walls have a porosity of above 10% as in a conventional honeycomb catalyst carrier, the coagulated water of moisture in exhaust gas easily accumulates in the pores of the partition walls, and the thermal energy is taken by the thermal capacity (latent heat, sensible heat) of the coagulated water to inhibit the temperature rise of the honeycomb catalyst carrier. In particular, in cold environments, moisture in exhaust gas remarkably coagulates, and a large amount of the coagulated water accumulates in the pores of the honeycomb catalyst carrier. When the porosity of the partition walls is below 0.5%, the Young's modulus of the partition walls becomes too high, and the thermal shock resistance of the honeycomb catalyst carrier 100 falls.

Further, since the porous partition walls 1 contain cordierite or aluminum titanate as a main component and have a porosity of 0.5% or more and 10% or less, the structural strength of the honeycomb catalyst carrier 100 can be highly maintained even if the thickness of the partition walls 1 of the honeycomb catalyst carrier 100 is reduced. Therefore, damage upon inserting the honeycomb catalyst carrier 100 into a metallic can and maintaining it therein (hereinbelow sometimes referred to as "canning") can effectively be inhibited. In addition, as described above, since the structural strength of the partition walls can be highly maintained, even if a foreign substance such as an oxidized scale and a welding pit of an exhaust manifold is mixed in the exhaust gas to be purified, etching of the honeycomb catalyst carrier by erosion can effectively be inhibited.

In the present specification, the "main component" means a component contained in the constitution material at a ratio of 90 mass% or more. Thus, the partition walls 1 of the honeycomb catalyst carrier 100 are made of a porous body containing cordierite or aluminum titanate at 90 mass% or more. The partition walls 1 of the honeycomb catalyst carrier 100 of the present embodiment are made of a porous body containing cordierite or aluminum titanate at more preferably 95 mass% or more, particularly preferably 98 mass% or more.

By employing cordierite or aluminum titanate as the main component, thermal expansion of the honeycomb catalyst carrier can be decreased, and the thermal shock resistance can be improved. Examples of the components other than the main component include alumina, silica, titania, and glass.

Though the lower limit of the porosity of the partition walls is 0.5% or more, the porosity of the partition walls is preferably 1% or more, more preferably 2% or more. Though the upper limit of the porosity of the partition walls is 10% or less, the porosity of the partition walls is preferably 8% or less, more preferably 5% or less. Such a configuration enables to obtain a honeycomb catalyst carrier where coagulated water more hardly accumulates in the pores while suppressing the decrease in thermal shock resistance.

There is no particular limitation on the cell density, partition wall thickness, and aperture ratio in a cross section perpendicular to the cell extension direction of the honeycomb catalyst carrier. In the honeycomb catalyst carrier of the present embodiment, the cell density is preferably 15 cells/cm² or more and 150 cells/cm² or less. In addition, the thickness of the partition walls (hereinbelow sometimes referred to as the "partition wall thickness") is preferably 25 µm or more and 100 µm or less. In addition, the aperture ratio in a cross section perpendicular to the cell extension direction is preferably 90% or more and 95% or less.

By specifying the cell density to 15 cells/cm² or more and 150 cells/cm² or less, the contact area between the partition walls and the exhaust gas can effectively be secured, and the honeycomb catalyst carrier can easily be warmed up. For example, when the cell density is below 15 cells/cm², the contact area between the partition walls and exhaust gas reduces, and it may become difficult to warm up the honeycomb catalyst carrier upon engine start-up. On the other hand, when the cell density is above 150 cells/cm², the mass of the honeycomb catalyst carrier is increased, and the temperature-rising performance of the honeycomb catalyst carrier may be deteriorated. In addition, the pressure loss of the honeycomb catalyst carrier may increase.

By specifying the partition wall thickness to 25 µm or more and 100 µm or less, the honeycomb catalyst carrier is easily warmed up. Though it is preferable that the partition wall thickness is thin from the viewpoint of warming up the honeycomb catalyst carrier fast, when the partition wall thickness is below 25 µm or less, in the case that a fine defect is formed in a partition wall, there is caused variance in strength among the honeycomb catalyst carriers as articles. That is, even if the influence of the fine defect as described above on the strength is negligibly small from the strength of the entire partition walls in the case of thick partition walls, the influence on the strength becomes large in the case of thin partition walls. Therefore, it may become impossible to ignore defects admitted in a honeycomb catalyst carrier having thick partition walls, defects inevitably present, and the like.

The "thickness of the partition walls" means thickness of the walls (partition walls) partitioning two adjacent cells 2 in a cross section obtained by cutting the honeycomb catalyst carrier 100 perpendicularly to the cell 2 extension direction. The "thickness of the partition walls" can be measured by, for example, an image analyzer (trade name of "NEXIV, VMR-1515" produced by Nikon Corporation).

By specifying the aperture ratio in a cross section perpendicular to the cell extension direction of the honeycomb catalyst carrier to 90% or more and 95% or less, the strength can be maintained while suppressing the pressure loss and the thermal capacity to be low. This enables to reduce the pressure loss, make initial temperature rise fast, and secure sufficient strength. For example, when the aperture ratio is below 90%, the pressure loss increases too much, thereby reducing engine output and excessively increasing thermal capacity to increase time for initial temperature rise. During the time, purification performance may be deteriorated. On the other hand, when the aperture ratio is above 95%, damage may be caused upon canning due to insufficient strength. The aperture ratio in a cross section perpendicular to the cell extension direction of the honeycomb catalyst carrier is further preferably 91% or more, particularly preferably 92% or more. The aforementioned aperture ratio is further preferably 94% or less.

In addition, the partition walls has an average thermal expansion coefficient of 1×10⁻⁶/K or less at 200 to 800°C in the cell extension direction. Such a configuration enables to obtain a honeycomb catalyst carrier excellent in thermal shock resistance. For example, when the average thermal expansion coefficient is above 1×10⁻⁶/K, thermal stress is increased, and the thermal shock resistance may fall. In a honeycomb catalyst carrier of the present embodiment, the average thermal expansion coefficient at 200 to 800°C in the cell extension direction of the partition wall is further preferably 0.8×10⁻⁶/K or less, particularly preferably 0.6×10⁻⁶/K or less.

Though there is no particular limitation on the shape of the honeycomb catalyst carrier of the present embodiment, it is preferably a circular cylindrical shape, a cylindrical shape having elliptic end faces, a columnar shape having polygonal end faces, such as "square, rectangular, triangular, pentagonal, hexagonal, and octagonal" end faces. Fig. 1 shows an example of a circular cylindrical honeycomb catalyst carrier 100. Though the honeycomb catalyst carrier 100 shown in Fig. 1 has an outer peripheral wall 3, it does not have to have the outer peripheral wall 3. The outer peripheral wall 3 may be formed together with partition walls 1 when the honeycomb formed body is extruded in the process for producing a honeycomb catalyst carrier 100. The outer peripheral wall does not have to be formed upon extrusion. For example, the outer peripheral wall 3 can be formed by applying a ceramic material on the outer peripheral portion of the partition walls 1 separating and forming the cells 2.

There is no particular limitation on the cell shape (cell shape in a cross section perpendicular to the central axial direction (cell extension direction) of the honeycomb catalyst carrier) of the honeycomb catalyst carrier 100 of the present embodiment. Examples of the cell shape of the honeycomb catalyst carrier 100 include a triangle, a quadrangle, a hexagon, an octagon, a circle, or a combination of these shapes. Among quadrangles, a square and a rectangle are preferable.

The honeycomb catalyst carrier of the present embodiment is used as a catalyst carrier by loading a catalyst on the partition walls of the honeycomb catalyst carrier.

There is no particular limitation on the kind of the catalyst loaded on the honeycomb catalyst carrier of the present embodiment. Examples of the kind include a ternary catalyst, a NOx selective reduction SCR catalyst, an oxidation catalyst, and a NOx storage catalyst. In particular, the honeycomb catalyst carrier of the present embodiment can raise the temperature of the catalyst loaded on the honeycomb catalyst carrier faster. Therefore, in the case of loading a ternary catalyst, hydrocarbon (HC) and carbon monoxide (CO) can be purified effectively even in the initial engine-driving stage to be able to obtain a high purification function.

The ternary catalyst means a catalyst for purifying mainly hydrocarbon (HC), carbon monoxide (CO), and nitrogen oxide (NOx). An example of the ternary catalyst is a catalyst containing platinum (Pt), palladium (Pd), and rhodium (Rh). The ternary catalyst purifies hydrocarbon to have water and carbon dioxide, carbon monoxide to have carbon dioxide, and a nitrogen oxide to have nitrogen by oxidation or reduction.

Examples of the NOx selective reduction SCR catalyst include as least one kind selected from a group consisting of metal-substituted zeolite, vanadium, titania, tungsten oxide, silver, and alumina. Examples of the NOx storage catalyst include alkali metal and alkali earth metal. Examples of the alkali metal include K, Na, and Li. Examples of the alkali earth metal include Ca. The oxidation catalyst contains a noble metal. The noble metal is preferably at least one kind selected from a group consisting of Pt, Rh, and Pd.

### (2) Method for manufacturing honeycomb catalyst carrier:

Next, a method for manufacturing the honeycomb catalyst carrier of the present embodiment will be described. A method for manufacturing a honeycomb catalyst carrier of the present embodiment is provided with a kneaded material preparation step, a forming step, and a firing step. The kneaded material preparation step is a step for obtaining a kneaded material by mixing and kneading raw materials containing a ceramic raw material. The forming step is a step for obtaining a honeycomb formed body by forming the kneaded material obtained in the kneaded material preparation step into a honeycomb shape. The firing step is a step for obtaining a honeycomb catalyst carrier provided with porous partition walls separating and forming a plurality of cells functioning as fluid passages by drying and firing the honeycomb formed body obtained in the forming step.

The porosity of the partition walls can be adjusted by the components of the forming raw materials containing the ceramic raw material and the particle diameter of the forming raw material. In addition, the porosity of the partition walls can be adjusted by the firing temperature upon drying and firing the honeycomb formed body.

### (2-1) Kneaded material preparation step:

Upon manufacturing the honeycomb catalyst carrier of the present embodiment, in the first place, a forming raw material containing a ceramic raw material is mixed and kneaded to obtain a kneaded material (kneaded material preparation step). It is preferable to use a cordierite-forming raw material or aluminum titanate as the ceramic raw material. Incidentally, the cordierite-forming raw material is a ceramic raw material blended to have a chemical composition of 42 to 56 mass% of silica, 30 to 45 mass% of alumina, and 12 to 16 mass% of magnesia and forms cordierite by firing.

As particles constituting each forming raw material (hereinbelow referred to as "raw material particles"), it is preferable to use particles having relatively small particle diameters. Though specific particle diameter sizes depend on the kind of the forming raw material, for example, the average particle diameter is preferably 0.2 to 10 µm, more preferably 0.3 to 8 µm. By using raw material particles having such an average particle diameter, the honeycomb formed body becomes dense and tight to be able to lower the porosity of the resultant honeycomb catalyst carrier.

In addition, it is preferable that the forming raw material is prepared by mixing a dispersion medium, an organic binder, an inorganic binder, a surfactant, a pore former, and the like with the aforementioned ceramic raw material. There is no particular limitation on the composition ratio of the raw materials, and it is preferable to employ a composition ratio according to a structure, a material, and the like of the honeycomb catalyst carrier to be manufactured.

As the dispersion medium, water can be employed. The amount of the dispersion medium to be added is preferably 10 to 30 parts by mass with respect to 100 parts by mass of the ceramic raw material.

As the organic binder, it is preferable to employ methyl cellulose, hydroxypropylmethylcellulose, hydroxypropylethyl cellulose, hydroxyethyl cellulose, carboxymethyl cellulose, polyvinyl alcohol, or a combination of these. The amount of the organic binder to be added is preferably 3 to 8 parts by mass with respect to 100 parts by mass of the ceramic raw material.

As a surfactant, ethylene glycol, dextrin, fatty acid soap, polyalcohol, or the like may be employed. These may be used alone or in combination of two or more. The amount of the surfactant to be added is preferably 0.2 to 0.5 part by mass with respect to 100 parts by mass of the ceramic raw material.

There is no particular limitation on the method for forming a kneaded material by kneading the forming raw material, and, for example, a method using a kneader, a vacuum kneader, or the like may be employed.

### (2-2) Forming step:

Next, the kneadedmaterial obtained above is formed into a honeycomb shape to obtain a honeycomb formed body (forming step). There is no particular limitation on the method for forming a honeycomb formed body by forming the kneaded material, and a known forming method such as extrusion or injection may be employed. A suitable example is a method for forming a honeycomb formed body by extrusion using a die having a desired cell shape, partition wall thickness, and cell density. As the material for the die, a superhard alloy, which hardly abrades away, is suitable.

There is no particular limitation on the shape of the honeycomb formed body, and it is preferably a circular cylindrical shape, a cylindrical shape having elliptic end faces, a cylindrical shape having polygonal end faces, such as "square, rectangular, triangular, pentagonal, hexagonal, and octagonal" end faces are preferable.

### (2-3) Firing step:

Next, the honeycomb formed body obtained above is dried and fired to obtain a honeycomb catalyst carrier provided with porous partition walls separating and forming a plurality of cells functioning as fluid passages (firing step). Thus, a honeycomb catalyst carrier having a partition wall porosity of 0.5% or more and 10% or less can be obtained.

Though there is no particular limitation on the drying method, for example, hot air drying, microwave drying, dielectric drying, reduced pressure drying, vacuum drying, and freeze drying may be employed. Of these, it is preferable to employ dielectric drying, microwave drying, or hot air drying alone or in combination.

It is preferable that the honeycomb formed body is calcined before firing (main firing) the honeycomb formed body. The calcination is performed for degreasing, and the method is not particularly limited as long as at least a part of organic matter (organic binder, surfactant, pore former, and the like) in the honeycomb formed body can be removed. Generally, since the firing temperature of an organic binder is about 100 to 300°C, it is preferably heated at about 200 to 1000°C for about 10 to 100 hours as calcination conditions in an oxidation atmosphere.

The firing (main firing) of the honeycomb formed body is performed to secure predetermined strength by densification by sintering the forming raw material constituting the calcined forming body. Since the firing conditions (temperature, time, atmosphere) are different depending on the kind of the forming raw material, suitable conditions may be selected according to the kind. For example, in the case that a cordierite-forming raw material is used, the firing temperature is preferably 1350 to 1440°C. In addition, regarding the firing time, the highest temperature-keeping time is preferably 3 to 10 hours. Though there is no particular limitation on the apparatus for main firing, an electric furnace, a gas furnace, or the like can be used.

### Example

Hereinbelow, a honeycomb catalyst carrier of the present invention will be described more specifically by Examples. However, the present invention is by no means limited to the Examples.

### (Example 1)

In Example 1, in the first place, a cordierite-forming raw material was used as the ceramic raw material, and, 100 parts by mass of the cordierite-forming raw material were added 35 parts by mass of a dispersion medium, 6 parts by mass of an organic binder, and 0.5 part by mass of a dispersant, and they were mixed and kneaded to prepare a kneaded material. As the cordierite-forming raw material, there were used 38.9 parts by mass of talc having an average particle diameter of 3µm, 40.7 parts by mass of kaolin having an average particle diameter of 1 µm, 5.9 parts by mass of alumina having an average particle diameter of 0.3 µm, and 11.5 parts by mass of boehmite having an average particle diameter of 0.5 µm. Each of the average particle diameters mean median size (d50) in a particle distribution of each raw material.

As the dispersion medium, water was used. As the organic binder, hydroxypropylmethyl cellulose was used. As the dispersant, ethylene glycol was used.

Next, the kneaded material obtained above was subjected to extrusion using a die for forming a honeycomb formed body to obtain a honeycomb formed body having a circular columnar shape (circular cylindrical shape) as the entire shape with a square cell shape. After the honeycomb formed body was dried by a microwave drier and then completely dried by a hot air drier, both the end portions of the honeycomb formed body were cut off to obtain a predetermined size. Then, the honeycomb formed body was dried by a hot air drier and then fired at 1445°C for 5 hours to obtain a honeycomb catalyst carrier (i.e., fired body).

The partition walls of the honeycomb catalyst carrier of Example 1 was 0.5%. The porosity was measured by mercury intrusion porosimetry analysis. Specifically, the porosity was measured using "AutoPore III 9420 (trade name)" produced by Micromeritics Instrument Corporation. In addition, the partition wall thickness was 80 µm. The cell density was 15 cells/cm². The cell pitch was 2852.0 µm. The aperture ratio in a cross section perpendicular to the cell extension direction of the honeycomb catalyst carrier was 93.90%. The results are shown in Table 1.

**Table 1**

| | Porosity (%) | Partition wall thickness (µm) | Cell density (cells/cm²) | Cell pitch (µm) | Aperture ratio (%) | Material for partition wall |
|---|---|---|---|---|---|---|
| Example 1 | 0.5 | 80 | 15 | 2582.0 | 93.90 | Cordierite |
| Example 2 | 5 | 47 | 30 | 1825.7 | 94.92 | Cordierite |
| Example 3 | 8 | 15 | 80 | 1118.0 | 97.33 | Cordierite |
| Example 4 | 8 | 35 | 55 | 1348.4 | 94.88 | Cordierite |
| Example 5 * | 8 | 35 | 55 | 1348.4 | 94.88 | Cordierite |
| Example 6 | 8 | 40 | 45 | 1490.7 | 94.71 | Cordierite |
| Example 7 | 8 | 40 | 55 | 1348.4 | 94.16 | Cordierite |
| Example 8 | 8 | 40 | 60 | 1291.0 | 93.90 | Cordierite |
| Example 9 | 8 | 40 | 70 | 1195.2 | 93.42 | Cordierite |
| Example 10 | 8 | 40 | 80 | 1118.0 | 92.97 | Cordierite |
| Example 11 | 8 | 40 | 100 | 1000.0 | 92.16 | Cordierite |
| Example 12 | 8 | 40 | 120 | 912.9 | 91.43 | Cordierite |
| Example 13 | 8 | 40 | 145 | 830.5 | 90.60 | Cordierite |
| Example 14 | 10 | 40 | 55 | 1348.4 | 94.16 | Cordierite |
| Example 15 | 10 | 40 | 70 | 1195.2 | 93.42 | Cordierite |
| Example 16 | 1 | 40 | 45 | 1490.7 | 94.71 | Cordierite |
| Example 17 | 2 | 40 | 45 | 1490.7 | 94.71 | Cordierite |
| Example 18 | 3 | 40 | 45 | 1490.7 | 94.71 | Cordierite |
| Example 19 * | 8 | 35 | 55 | 1348.4 | 94.88 | Aluminum titanate |
| Comp. Ex. 1 | 0.3 | 80 | 15 | 2582.0 | 93.90 | Cordierite |
| Comp. Ex. 2 | 22 | 80 | 15 | 2582.0 | 93.90 | Cordierite |
| Comp. Ex. 3 | 0.3 | 40 | 45 | 1490.7 | 94.71 | Cordierite |
| Comp. Ex. 4 | 22 | 40 | 45 | 1490.7 | 94.71 | Cordierite |
| Comp. Ex. 5 | 27 | 40 | 45 | 1490.7 | 94.71 | Cordierite |
| Comp. Ex. 6 | 35 | 40 | 45 | 1490.7 | 94.71 | Cordierite |
| Comp. Ex. 7 | 15 | 40 | 40 | 1581.1 | 95.00 | Cordierite |
| Comp. Ex. 8 | 15 | 35 | 55 | 1348.4 | 94.88 | Cordierite |
| Comp. Ex. 9 | 19 | 15 | 150 | 816.5 | 96.36 | Cordierite |
| Comp. Ex. 10 | 12 | 15 | 150 | 816.5 | 96.36 | Cordierite |

| | | | | | | |
|---|---|---|---|---|---|---|
| * denotes a reference example. | | | | | | |

In addition, the average thermal expansion coefficient at 200 to 800°C in the cell extension direction of the cells of the honeycomb catalyst carrier of Example 1 was 0.9×10⁻⁶/K. The thermal expansion coefficient was measured by the use of "2S-TMA (trade name) " produced by Rigaku Corporation. The results are shown in Table 2.

In addition, regarding a honeycomb catalyst carrier obtained above, the "evaluation for thermal shock resistance" was made, and the "cold start light-off time test" was performed. From each result, "overall evaluation" regarding the honeycomb catalyst carrier of each Example was given. The results are shown in Table 2.

### [Evaluation for thermal shock resistance]

Combustion gas and room temperature air were alternately sent into the honeycomb catalyst carrier, and whether a crack was caused in the honeycomb catalyst carrier or not was checked to evaluate for the thermal shock resistance. As the conditions for sending the combustion gas and the room temperature air, after the combustion gas was sent for 5 minutes, the room temperature air was sent for 10 minutes, and it was repeated 10 times. The temperature of the combustion gas was raised, and the highest temperature without causing a crack was defined as "thermal shock resistance temperature". In addition, in the column of "evaluation" in the "evaluation for thermal shock resistance", "OK (passed)" was given in the case that the thermal shock resistance temperature was 850°C or more, and "NG (failed)" was given in the case that the thermal shock resistance temperature was below 850°C.

### [Cold start light-off time test]

A ternary catalyst was loaded on a honeycomb catalyst carrier having an end face diameter of 106 mm and a length in the cell extension direction of 114 mm to manufacture a honeycomb catalyst carrier. As the ternary catalyst, there was used a catalyst containing platinum (Pt), Rhodium (Rh), and palladium (Pd) at a mass ratio of 1:0.5:4 (Pt:Rh:Pd) and containing alumina and ceria as the main components. The amount of the ternary catalyst loaded was 200g per liter of the volume of the honeycomb catalyst carrier. The noble metal (Pt, Rh, and Pd) content in the ternary catalyst was controlled to 2g per liter of the volume of the honeycomb catalyst carrier upon loading the ternary catalyst on the honeycomb catalyst carrier.

The honeycomb catalyst carrier manufactured above was mounted on the exhaust system of a vehicle with a 2000-cc gas engine. After the vehicle was warmed up according to FTP regulation driving mode (LA-4), stopping-cooling time was taken for at least 6 hours, and then it was started again. On this occasion, the hydrocarbon concentration was measured at the inlet end face and the outlet end face of the honeycomb catalyst carrier. From the hydrocarbon concentration at the inlet end face and the hydrocarbon (HC) concentration at the outlet end face, the hydrocarbon purification rate was calculated at intervals of 0.5 second, and the time from the restart until the purification rate became 50% was defined as the light-off time (sec.). The hydrocarbon purification rate was calculated by the formula " { (hydrocarbon concentration of inlet end face - hydrocarbon concentration of outlet end face) / hydrocarbon concentration of inlet end face} × 100". In addition, in the column of "evaluation" in the "cold start light-off time test", "OK (passed)" was given in the case of 15 sec. or less, and "NG (failed)" was given in the case of above 15 sec.

### [Overall evaluation]

When both the evaluations of [evaluation for thermal shock resistance] and [cold start light-off time test] were "OK (passed) ", the overall evaluation result was "OK (passed)". When at least one of the evaluation results was "NG (failed)", the overall evaluation result was "NG (failed)".

**Table 2**

| | Thermal expansion coefficient (average of 200 to 800°C) (/K) | Evaluation of thermal shock resistance | | Cold start light-off time test | | Overall evaluation |
|---|---|---|---|---|---|---|
| | | Thermal shock resistance temper-ature (°C) | Evaluation | Light-off time (sec) | Evaluation | |
| Example 1 | 0.9×10⁻⁶ | 1050 | OK | 8 | OK | OK |
| Example 2 | 0.9×10⁻⁶ | 1050 | OK | 10 | OK | OK |
| Example 3 | 0.9×10⁻⁶ | 900 | OK | 7 | OK | OK |
| Example 4 | 0.9×10⁻⁶ | 1050 | OK | 8 | OK | OK |
| Example 5 * | 1.2×10⁻⁶ | 850 | OK | 8 | OK | OK |
| Example 6 | 0.9×10⁻⁶ | 1050 | OK | 8 | OK | OK |
| Example 7 | 0.9×10⁻⁶ | 1050 | OK | 7.5 | OK | OK |
| Example 8 | 0.9×10⁻⁶ | 1050 | OK | 8.5 | OK | OK |
| Example 9 | 0.9×10⁻⁶ | 1050 | OK | 9 | OK | OK |
| Example 10 | 0.9×10⁻⁶ | 1070 | OK | 10 | OK | OK |
| Example 11 | 0.9x10⁻⁶ | 1080 | OK | 10 | OK | OK |
| Example 12 | 0.9×10⁻⁶ | 1100 | OK | 12 | OK | OK |
| Example 13 | 0.9×10⁻⁶ | 1050 | OK | 14 | OK | OK |
| Example 14 | 0.9×10⁻⁶ | 1050 | OK | 8 | OK | OK |
| Example 15 | 0.9×10⁻⁶ | 1100 | OK | 10.5 | OK | OK |
| Example 16 | 0.9×10⁻⁶ | 1050 | OK | 6 | OK | OK |
| Example 17 | 0.9×10⁻⁶ | 1050 | OK | 7 | OK | OK |
| Example 18 | 0.9×10⁻⁶ | 1050 | OK | 7 | OK | OK |
| Example 19 * | 1.2×10⁻⁶ | 850 | OK | 8 | OK | OK |
| Comp. Ex. 1 | 0.9×10⁻⁶ | 550 | NG | 7.5 | OK | NG |
| Comp. Ex. 2 | 0.9×10⁻⁶ | 1030 | OK | 20 | NG | NG |
| Comp. Ex. 3 | 0.9×10⁻⁶ | 500 | NG | 11.5 | OK | NG |
| Comp. Ex. 4 | 0.9×10⁻⁶ | 1000 | OK | 22 | NG | NG |
| Comp. Ex. 5 | 0.9×10⁻⁶ | 1000 | OK | 25 | NG | NG |
| Comp. Ex. 6 | 0.9×10⁻⁶ | 1000 | OK | 32 | NG | NG |
| Comp. Ex. 7 | 0.9×10⁻⁶ | 1050 | OK | 19 | NG | NG |
| Comp. Ex. 8 | 0.9×10⁻⁶ | 1050 | OK | 18 | NG | NG |
| Comp. Ex. 9 | 0.9×10⁻⁶ | 1050 | OK | 19 | NG | NG |
| Comp. Ex. 10 | 0.9×10⁻⁶ | 1050 | OK | 16 | NG | NG |

| | | | | | | |
|---|---|---|---|---|---|---|
| * denotes a reference example. | | | | | | |

### (Examples 2 to 19, Comparative Examples 1 to 10)

Each honeycomb catalyst carrier was manufactured in the same manner as in Example 1 except that the "porosity (%)", "partition wall thickness (µm)", "cell density (cell/cm²)", "cell pitch (µm)", "aperture ratio (%)", and "material for partition wall" were changed as shown in Table 1. The honeycomb catalyst carrier manufactured above was subjected to the "evaluation for thermal shock resistance" and "cold start light-off time test" in the same manner as in Example 1. From the results, the "overall evaluation" of the honeycomb catalyst carrier of each Example was given. The results are shown in Table 2.

In Example 2, the porosity was adjusted to 5% by the use of the same raw materials as Example 1 except that the average particle diameter of talc was 5 µm. In Examples 3 to 13 and 19, the porosity was adjusted to 8% by the use of the same raw material as Example 1 except that the average particle diameter of talc was 5 µm and that the average particle diameter of alumina was 0.5 µm.

In Examples 14 and 15, the porosity was adjusted to 10% by using the kneaded material prepared in the same manner as in Examples 3 to 13 and increasing the firing time by 10% with respect to Examples 3 to 13. In addition, in Example 16, the porosity was adjusted to 1% by using the kneaded material prepared in the same manner as in Example 1 and increasing the firing time by 20% with respect to Example 1.

In Example 17, the porosity was adjusted to 2% by using the same raw materials as in Example 1 except that the average particle diameter of talc was 5 µm and that the average particle diameter of boehmite was 0.8 µm. In Example 18, the porosity was adjusted to 3% by using the same raw material as in Example 1 except that the average particle diameter of talc was 5 µm and that the average particle diameter of boehmite was 1 µm.

In Comparative Examples 1 and 3, the porosity was adjusted to 0.3% by using the same raw material as in Example 1 except that the average particle diameter of talc was 2 µm and that the average particle diameter of alumina was 0.2 µm and increasing the firing time by 10% with respect to Example 1. In Comparative Examples 2 and 4, the porosity was adjusted to 22% by using the same raw material as in Example 1 except that the average particle diameter of talc was 8 µm and that the average particle diameter of alumina was 1 µm. In Comparative Example 5, the porosity was adjusted to 27% by decreasing the firing time by 20% with respect to Comparative Examples 2 and 4.

In Example 6, the porosity was adjusted to 35% by using the same raw materials as in Example 1 except that the average particle diameter of talc was 12 µm and that the average particle diameter of alumina was 5 µm. In Comparative Examples 7 and 8, the porosity was adjusted to 15% by raising the firing temperature by 30% with respect to Comparative Example 6. In Comparative Example 9, the porosity was adjusted to 19% by increasing the firing time by 10% with respect to Comparative Example 6. In Comparative Example 10, the porosity was adjusted to 12% by decreasing the firing time by 20% with respect to Example 14.

As shown in Table 2, the honeycomb catalyst carriers of Examples 1 to 19 could obtain good results regarding all the evaluations. In particular, in the cold start light-off time test, coagulated water of the moisture in exhaust gas hardly accumulates in the pores of the partition walls, and the heat transferred to the honeycomb catalyst carrier is hardly taken by the coagulated water. Therefore, it is considered that the heat transferred to the honeycomb catalyst carrier is effectively used for heating the honeycomb catalyst carrier and the catalyst loaded on the honeycomb catalyst carrier, thereby warming up the honeycomb catalyst carrier fast.

On the other hand, each of the honeycomb catalyst carriers of Comparative Examples 1 to 3 had low thermal shock resistance temperature and the evaluation result of "NG (failed)" as the evaluation of thermal shock resistance. This is considered to be because, since the porosity of the honeycomb catalyst carriers in Comparative Examples 1 and 3 was 0.3%, the Young's modulus of the partition walls became too high to deteriorate the thermal shock resistance. In the other Comparative Examples, since the porosity of the honeycomb catalyst carrier was above 10%, the light-off time of the cold start light-off time test was long, and the evaluation result was "NG (failed)". This is considered to be because coagulated water of moisture in exhaust gas accumulated in the pores of the partition walls of the honeycomb catalyst carrier, which allowed the heat (heat energy) transferred to the honeycomb catalyst carrier to be used for the latent heat and the sensible heat of the coagulated water.

### Industrial Applicability

A honeycomb catalyst carrier of the present invention can be used as a catalyst carrier for loading a catalyst for purifying exhaust gas.

## Claims

1. A honeycomb catalyst carrier (100) provided with porous partition walls (1) containing cordierite or aluminum titanate as a main component and separating and forming a plurality of cells (2) functioning as fluid passages,
wherein the partition walls (1) have a porosity of 0.5% or more and 10% or less; and
wherein the partition walls (1) have an average thermal expansion coefficient of 1×10⁻⁶/K or less at 200 to 800°C in the cell extension direction.

2. The honeycomb catalyst carrier (100) according to Claim 1, wherein the honeycomb catalyst carrier (100) has a cell density of 15 cells/cm² or more and 150 cells/cm² or less, a thickness of 25 µm or more and 100 µm or less, and an aperture ratio of 90% or more and 95% or less in a cross section perpendicular to the cell extension direction.

## Patentansprüche

1. Wabenkatalysatorträger (100), ausgestattet mit porösen Trennwänden (1), die Cordierit oder Aluminiumtitanat als Hauptkomponente enthalten und eine Vielzahl von Zellen (2), die als Fluiddurchgänge fungieren, voneinander trennen und ausbilden,
worin die Trennwände (1) eine Porosität von 0,5 % oder mehr und 10 % oder weniger aufweisen; und
worin die Trennwände (1) bei 200 bis 800 °C in der Zellenerstreckungsrichtung einen durchschnittlichen Wärmeausdehnungskoeffizienten von 1x 10⁻⁶/K oder weniger aufweisen.

2. Wabenkatalysatorträger (100) nach Anspruch 1, worin der Wabenkatalysatorträger (100) eine Zelldichte von 15 Zellen/cm² oder mehr und 150 Zellen/cm² oder weniger, eine Dicke von 25 µm oder mehr und 100 µm oder weniger und ein Öffnungsverhältnis von 90 % oder mehr und 95 % oder weniger in einem auf die Zellenerstreckungsrichtung senkrecht stehenden Querschnitt aufweist.

## Revendications

1. Support de catalyseur en nid d'abeilles (100) pourvu de parois de séparation (1) poreuses contenant de la cordiérite ou du titanate d'aluminium en tant que composant principal et séparant et formant une pluralité de cellules (2) agissant en tant que passages de fluide,
dans lequel les parois de séparation (1) ont une porosité de 0,5 % ou plus et de 10 % ou moins ; et
dans lequel les parois de séparation (1) ont un coefficient de dilatation thermique moyen de 1 x 10⁻⁶/K ou moins à 200 à 800 °C dans la direction d'extension des cellules.

2. Support de catalyseur en nid d'abeilles (100) selon la revendication 1, dans lequel le support de catalyseur en nid d'abeilles (100) a une densité de cellules de 15 cellules/cm² ou plus et de 150 cellules/cm² ou moins, une épaisseur de 25 µm ou plus et 100 µm ou moins, et un rapport d'ouverture de 90 % ou plus et 95 % ou moins en coupe transversale perpendiculaire à la direction d'extension des cellules.
